Europäisches Patentamt

European Patent Office

Office européen des brevets

(19)

(11) Publication number: **0 104 316**
**B1**

(12)                    EUROPEAN PATENT SPECIFICATION

(45) Date of publication of patent specification: **04.11.87**

(51) Int. Cl.⁴: **C 08 F 8/44**

(21) Application number: **83105349.1**

(22) Date of filing: **31.05.83**

(54) **Preparation of salts of low molecular weight copolymers using metal oxides.**

(30) Priority: **04.08.82 US 405205**

(43) Date of publication of application:
**04.04.84 Bulletin 84/14**

(45) Publication of the grant of the patent:
**04.11.87 Bulletin 87/45**

(84) Designated Contracting States:
**DE FR GB IT**

(56) References cited:
**EP-A-0 017 230**
**EP-A-0 054 761**
**FR-A-1 393 730**
**US-A-3 586 659**

(73) Proprietor: **ALLIED CORPORATION**
**Columbia Road and Park Avenue P.O. Box 2245R**
**(Law Dept.)**
**Morristown New Jersey 07960 (US)**

(72) Inventor: **Lences, Charles Francis**
**190 Beechwood Road**
**Parsippany New Jersey 07054 (US)**

(74) Representative: **Baillie, Iain Cameron et al**
**c/o Langner Parry Isartorplatz 5**
**D-8000 München 2 (DE)**

Courier Press, Leamington Spa, England.

# 0 104 316

**Description**

Background of the Invention

This invention relates to a method of preparation of ethylene-alpha,beta-ethylenically unsaturated carboxylic acid copolymer salts; more particularly, this invention relates to the preparation of the metallic salts of low molecular weight copolymers of ethylene and an alpha,beta-ethylenically unsaturated carboxylic acid from the oxides of Group II metals from the Periodic Table of Elements.

It is known in the art to produce ionic metal salts from copolymers of at least one alpha-olefin of a general formula $RCH = CH_2$ where R is a radical selected from the class consisting of hydrogen and alkyl radicals having from 1 to 8 carbon atoms, and an alpha,beta-ethylenically unsaturated carboxylic acid. Such ionic hydrocarbon polymers and processes for preparing them as well as processes for preparing ionically crosslinked copolymers are described in U.S. Patent Nos. 3,264,272; 3,649,578; 3,969,434; 3,404,134; 3,789,035; 3,970,626; 3,779,952; US—A—3 586 659 and EP—A—0054761.

A review of the art, including the above-noted patents, shows that the prior art copolymer salts and processes for making them are generally directed to salts made from relatively high molecular weight copolymers.

Summary of the Invention

In accordance with this invention, a method has been found for making copolymer salts from low molecular weight copolymer acids formed from ethylene and an alpha,beta-ethylenically unsaturated carboxylic acid having at least one carboxylic acid group, and the metal cations of Group II metal oxides. The copolymer acid and the Group II metal oxide are fed to a reaction vessel. The copolymer acid and the metal oxide are mixed at a temperature between the melting point of the copolymer acid and 20°C, preferably 10°C above the melting point of the copolymer acid. During the initial mixing, the reaction vessel is preferably maintained at atmospheric pressure under an inert atmosphere, so that the oxygen content of the reaction vessel is minimized. The temperature is increased and the reaction is conducted at a reaction temperature which is a temperature from between 30°C above the melting point of the copolymer acid up to 300°C, preferably from between 30°C above the melting point up to 150°C. The reacting mixture is continually stirred or mixed within the reaction vessel. The temperature within the reaction vessel is controlled and maintained above the melting point of the polymer. Prior to removal of the products from the reaction vessel, the reactor can be vacuum stripped to remove volatiles, particularly moisture generated during the reaction.

A preferred embodiment of the present invention is a process where the copolymer acid is at least 75 mol percent ethylene, and preferably has an acid number from 40 to 160, and a number-average molecular weight of from 500 to 20,000, preferably from 1,000 to 15,000, more preferably from 1,000 to 6,000 and most preferably from 1,000 to 3,500, as measured by vapor pressure osmometry or size exclusion chromatography. The copolymer acid is preferably ethylene acrylic acid and the Group II metal oxide is preferably calcium oxide or magnesium oxide. The copolymer acid and the metal oxide are fed to a reaction vessel. The temperature in the reaction vessel is heated to and maintained between the melting point of the copolymer acid and 20°C above the melting point of the copolymer acid. During this time, a uniform mixing of the metal oxide and the copolymer acid takes place while reaction between the two components is minimized due to the low temperatures. The temperature is then increased to a level high enough for a more practicable rate of reaction. The reaction is conducted from greater than 20°C and preferably greater than 30°C above the melting point of the copolymer acid up to 300°C. Preferably, the reaction is conducted from 130°C to 300°C, more preferably from 120°C to 260°C, and most preferably from 140°C to 200°C. At the end of the reaction, the pressure can be reduced to below atmospheric pressure for a time sufficient to remove the volatiles. Preferably, the pressure is reduced to from 15 inches of mercury up to 29.9 inches of mercury ($51 \times 10^3$ to $101 \times 10^3$ Pa) (less than 1 atmosphere), more preferably the pressure is from 20 to 28 inches of mercury (68 to $10^3$ to $95 \times 10^3$ Pa), and most preferably from 24 to 26 inches of mercury ($81 \times 10^3$ to $88 \times 10^3$ Pa). The mixing of the metal oxide and the copolymer acid and the reaction is preferably conducted under an inert gas such as nitrogen.

The objects, features and advantages of the present invention will become apparent by reference to the following description.

Description of the Preferred Embodiments

The present invention is a process for producing copolymer salts from low molecular weight copolymer acids. The copolymer acids are made from ethylene and an alpha,beta-ethylenically unsaturated carboxylic acid having at least one carboxylic acid group. In the process, the carboxylic acid groups of the copolymer are neutralized by the metal cations of the oxides of metals from Group II of the Periodic Table of Elements. The copolymer acid and the metal oxide are fed to a reaction vessel. The reactants are mixed at a temperature above the melting point of the copolymer acid, but below the temperature at which any substantial reaction occurs. The reactants are mixed until the metal oxides are homogeneously dispersed in the copolymer acid matrix. The reaction rate is accelerated by increasing the temperature to at least the temperature at which an acceptable rate of reaction occurs. During the reaction, the reaction mass is continually mixed within the reacting vessel. Additionally, the temperature within the

2

reaction vessel is controlled and maintained above the polymer melting point. The reaction can proceed until no volatiles are observed or measured coming from the reacting mass. It is recognized that although the process description and examples to follow are directed to a batch type process, the process of the present invention is adaptable to a continuous process. The copolymer acid and metal oxide are mixed at a temperature above the melting point of the copolymer but at a low enough temperature so that the copolymer acid and salt do not significantly react. The mixing temperature is between the melting point of the copolymer acid and 20°C, preferably 10°C above the melting point of the copolymer acid. In this temperature range any reaction between the metal oxide and the copolymer acid is very slow. Therefore, a uniform mixture of the copolymer acid and metal salt can occur before reaction. This results in a more homogeneous copolymer salt when the reaction does take place. Additionally, it is desirable to mix the metal oxide with the copolymer acid at as low a temperature above the melting point of the salt as possible. The copolymer acid is more viscous at a lower temperature. The more viscous copolymer results in more shear during mixing and a more uniform mix. The mixing of the copolymer acid and the metal oxide in the temperature range between the melting temperature of the copolymer acid and 20°C, preferably 10°C above the melt temperature, allows a uniform mixture to result before any substantial reaction takes place. This allows the complete reaction to occur over a shorter period of time.

The time the mixture is maintained between the melting point of the copolymer acid and 20°C above the melting point of the copolymer acid can be considered an induction time. That is, all the time during which the reactants are brought together and the reaction rate is very slow. Eventually the reaction will take place and speed up. The addition of water accelerates the reaction. Water can be added to shorten the induction time or lower the reaction temperature. Water is a reaction product formed during the formation of the copolymer salt. Water so produced will accelerate the reaction.

Upon completion of the mixing step the reaction can be conducted at a faster more practical rate. This can occur by adding an initiating material, such as water, to initiate the reaction or more preferably, by raising the temperature. The temperature within the reaction vessel is controlled to assure volatilization of the volatilizable reaction products as they are produced. The predominant volatile is water produced on neutralization of the copolymer acid. The temperature is maintained at a higher, more practical reaction temperature which is at least 20°C above the melting temperature of the copolymer acid. Preferably, the reaction temperature is maintained at a temperature from 130°C to 300°C, more preferably from 130°C to 260°C, yet more preferably from about 140°C to about 220°C, and most preferably from 140° to 160°C. It has been found that the volatiles of the preferred copolymer salts are removed resulting in a uniform copolymer salt free of volatiles when heated to above a lower limit, preferably 150°C. The upper limit on temperature is preferably below 220°C. The reaction temperature should be as low as possible so that the copolymer salts do not experience deleterious effects of heat, such as discoloration, particularly when oxygen is present. However, the temperature must be high enough to allow the copolymer salt to have a low enough viscosity so that it can be mixed, and removed from the reactor, and so that volatiles can be removed.

To assure a uniform product, the copolymer salt and metal oxide are mixed in the vessel for a sufficient time to form a homogeneous mixture. The reaction can proceed for as long as necessary to be complete. To assure a uniform product free from volatiles, it is preferred that the reaction proceed for at least one-half hour. Preferably, the reaction should proceed from one-half hour to five hours, and more preferably from one-half hour to four hours. Preferably the mixing and reaction steps are conducted under a nitrogen blanket at atmospheric pressure. A preferred pressure range is from 0.8 atmospheres to five atmospheres ($81 \times 10^3$ to $507 \times 10^3$ Pa) and more preferably one atmosphere to two atmospheres ($101 \times 10^3$ to $203 \times 10^3$ Pa). The nitrogen atmosphere prevents oxidation and discoloration of the copolymer salt. Copolymer salts produced in the presence of oxygen and at least atmospheric pressure were yellow in appearance and contained many gels. At the end of the reaction, the volatiles can be vacuum stripped from the reaction.

In the process of the present invention the low molecular weight of the copolymer acid makes it convenient to neutralize the copolymer acid in a reaction vessel either batchwise or continuous. The molecular weights of the copolymer acids are so low that the viscosity is too low for processing in the manner described in the referenced prior art patents, i.e. extruders and on mills. Therefore, the present invention provides a method to easily neutralize low molecular weight copolymer acids to form corresponding copolymer salts which are color stable, and uniform in appearance.

In an alternate embodiment of the present invention the copolymer acid and metal oxide are mixed at a temperature above the melting point of the copolymer but at a low enough temperature so that the copolymer acid and salt do not significantly react. The mixing temperature is between the melting point of the copolymer acid and 20°C, preferably 10°C above the melting point of the copolymer acid. Preferably, the copolymer acid is melted prior to adding the metal oxide. The copolymer acid and the metal oxide are mixed until the metal oxide is uniformly dispersed in the copolymer acid. The mixture is substantially non-reacted. The mixture can then be cooled to room temperature. The cooled mixture can be heated to a reaction temperature at a later time. Preferably the cooled mixture is ground to a powder or pelletized. This embodiment is particularly useful in making mixtures of copolymer acids and metal oxides which can be mixed as a premix or masterbatch with additional copolymer acid. The premix can contain a copolymer

0 104 316

acid or up to 65 percent, preferably from one percent to 65 percent, and more preferably from 10 to 30 percent by weight of the mixture.

The alpha,beta-ethylenically unsaturated carboxylic acids can be copolymerized with ethylene, the acids preferably having 3 to 8 carbon atoms. Examples of such acids include acrylic acid, methacrylic acid, ethacrylic acid, itaconic acid, maleic acid, fumaric acid and monoesters of other dicarboxylic acids such as methyl hydrogen maleate, methyl hydrogen fumarate, ethyl hydrogen fumarate, and maleic anhydride which is considered to behave like an acid and be an acid in the present invention. The concentration of the ethylene in the copolymer is at least 75 mol percent, and more preferably 80 to 95 mol percent.

A preferred alpha,beta-ethylenically unsaturated monocarboxylic acid is acrylic acid. The ethylene acrylic acid copolymer has an acid number in the range from 1 to 180, with an acid number from 40 to 160 being preferred, and an acid number from 40 to 120 being most preferred. The acid number is determined by the number of milligrams of potassium hydroxide to neutralize one gram of acid. The number average molecular weight of the copolymer acid is from 500 to 20,000, preferably from 1,000 to 15,000, more preferably from 1,000 to 6,000, and most preferably from 1,000 to 3,500, as measured by size exclusion chromatography.

The low molecular weight copolymer acids used to make the copolymer salts of the present invention can be prepared by any suitable process known in the art.

Although various alpha,beta-ethylenically unsaturated carboxylic acid copolymers may be used, as noted above, it is preferred to use ethylene acrylic acid copolymers. Table I below characterizes three preferred ethylene acrylic acid copolymers which can be used in this process. These acids have number average molecular weights in the range of from 1,000 to 3,500.

TABLE I

| Copolymer Acid | Melting Pt. (ASTM E—28) | | Hardness dmm (ASTM D—5) | Density g/cc (ASTM D—1505) |
|---|---|---|---|---|
| | °C | °F | | |
| A | 108 | 226 | 2.0 | 0.93 |
| B | 102 | 215 | 4.0 | 0.93 |
| C | 92 | 198 | 11.5 | 0.93 |

| Copolymer Acid | Brookfield Viscosity @ 140°C | | Acid No. mg KOH/g | Wt.% Acrylic Acid | Mol% Acrylic Acid |
|---|---|---|---|---|---|
| | (cps) | Pas | | | |
| A | (500) | 0.5 | 40 | 5 | 2.1 |
| B | (650) | 0.65 | 75 | 9 | 3.9 |
| C | (650) | 0.65 | 120 | 15 | 6.6 |

Oxides of metals from Group II of the Periodic Table of Elements are used to neutralize the copolymer acid. Metal cations which are preferred are magnesium, calcium, barium and zinc, with calcium cations being most preferred. The copolymer acid can be neutralized up to 100 percent; however, it is preferred to neutralize from 15 to 60 percent and more preferably from 25 to 50 percent neutralization of the carboxylic acid groups of the copolymer acid using the process of the present invention. There can be more metal oxide than needed to attain 100 percent neutralization of the copolymer acid. This is preferably the case when making premixes of the copolymer acid and metal oxides.

The temperature at which the copolymer acid of Table I and metal oxides are mixed should be no greater than 20°C above the melting point of the copolymer acids. The reaction temperature is at least 20°C above the listed melting points to assure the removal of all volatiles and allow the continual mixing and handling of the reaction product of the copolymer salt. Of course, the temperature can be optimized or varied depending on the particular copolymer salt being produced. When the ionic crosslinking takes place, the viscosity of the reaction product increases with the neutralization level.

By mixing the metal oxide and copolymer acid at a temperature between the melting point of the copolymer acid and 20°C above the melting point of the copolymer acid, the metal oxide is homogeneously and completely dispersed. This results in complete reaction between the metal oxide and the carboxyl groups. The products are substantially free from undissolved particles of metal oxide. The resulting copolymer salt can be produced at lower processing temperatures and in less mixing time at the reaction temperature.

4

Copolymer acid salts produced by the method of the present invention are cream white in appearance and have few gel type impurities and no particles of undissolved base. The copolymer salts are uniform in appearance and have good color stability. The mixing was good and all volatiles were released and removed leaving a very smooth and well-dispersed material.

Following are several examples which illustrate the nature of the invention and a manner of carrying it out. Although the following examples are conducted in a batch type laboratory setup, it is appreciated that the method of the present invention can be conducted continuously.

Examples 1—11

Examples 1—11 were conducted in a 5-liter round bottom flask equipped with a 4″ (10.2 cm) turbine agitator driven by an electric motor, condenser, thermocouple, and provision for purging with nitrogen and stripping under vacuum. Heating was accomplished with an electric heating mantle.

Twenty-five hundred grams of copolymer acid B of Table I was added to the flask. The copolymer acid was heated with agitation at a temperature (Tm) to melt it under a nitrogen atmosphere of about one atmosphere. Over a ten minute period 43.25 grams of calcium oxide powder (1.73% if 100% pure) was added with continued stirring to disperse the calcium oxide powder. The calcium oxide was obtained from the Mississippi Lime Company. It was about 98% pure and 325 mesh. (The size of particles passing through a 325 mesh screen is approximately 44 micrometers).

The mixture was kept at Tm until a reaction apparently was beginning as indicated by viscosity increase and bubble formation. This time was the induction time. The temperature was then raised to a reaction temperature (Tr). This is the temperature at which the copolymer acid and the metal salt reacted to form the copolymer salt. This temperature is dependent on the moisture present. The Tr is characterized by the generation of heat and water vapor bubbles being released. The heating was continued until a temperature of 150°C was reached where the reaction continued. The temperature was maintained at 150°C for 45 minutes and then a vacuum at 25 inches of mercury ($84 \times 10^3$ Pa) was applied for fifteen minutes. The molten product was discharged. In Examples 1—4 a nitrogen purge was used to assure removal of moisture. In Examples 1, 3, 4, 5, 8, 9 and 11 the indicated weight percent of water was added to the reactor. In Comparative 3 the Tm and Tr were both 160°C. In Comparatives 4 and 5 calcium hydroxide was used in place of calcium oxide. The induction time at various Tm's are shown on Table II. The melting point of copolymer B is 102°C.

## 0 104 316

### TABLE II
### A—C 580 46% Ca SALT USING CALCIUM OXIDE POWDER
### EFFECT OF CONDITIONS ON INDUCTION PERIOD

| Example | % $H_2O$ Added | Tm Temp °C | Induction Time (min.) |
|---|---|---|---|
| 1* | 0.10 | 110 | 10 |
| 2 | —— | 110 | 101 |
| 3 | 0.05 | 110 | 82 |
| 4* | 0.10 | 110 | 7 |
| 5 | 0.05 | 110 | 33 |
| 6 | —— | 110 | 48 |
| 7 | —— | 110 | 61 |
| 8 | 0.05 | 110 | 3 |
| 9 | 0.05 | 110 | 41 |
| 10 | —— | 110 | 59 |
| 11 | 0.05 | 110 | 22 |
| Comp 1* | —— | 150 | 3 |
| Comp 2* | —— | 130 | 5 |
| Comp 3* | —— | 165 | 1 |
| Comp 4* | —— | 110 | 0 ($Ca(OH)_2$) |
| Comp 5* | —— | 130 | 0 ($Ca(OH)_2$) |

* Considerable undispersed cation containing material in reaction product.

A review of Table II shows that as little as 0.05 percent water present lowers the induction time at Tm, which is the time at Tm before a reaction is apparent. When there is 0.1 percent water, the induction time is reduced considerably. the nitrogen purge has some effect on induction time. Comparatives 1—3 show that increased heating to 20°C above the melt temperature reduces the induction time. Comparatives 4 and 5 show that calcium hydroxide results in an immediate reaction. the importance of induction time is indicated in Examples 1 and 4 and Comparatives 1—5, which all had short or no induction time and has considerable amounts of undispersed calcium oxide or calcium hydroxide.

### Example 12
A premix was made by melting 30.0 grams of copolymer acid B from Table 1 in a 150 ml beaker heated to 120°C. Upon melting copolymer acid B 10.0 grams of calcium oxide of the type used in Example 1 was stirred in with a thermometer for ten minutes. The mixture was poured onto aluminum foil, cooled to room temperature and cut into strips, After 72 hours, 51 days, and 143 days samples of the mixture were remelted at 120°C. No apparent reaction had taken place in any of the samples. Therefore, a stable highly concentrated metal oxide in copolymer premix can be made. This premix is a useful and convenient way of adding a predispersed metal oxide to larger amounts of copolymer acids to obtain uniform dispersions in shorter mixing times and using less energy to disperse the metal oxide in the copolymer acid.

### Example 13
A premix was made by melting 50.0 grams of copolymer B from Table 1 in a beaker heated to between 110°C and 120°C. Upon melting copolymer acid B, 86.3 grams of calcium oxide was slowly added over a 20 minute period and stirred until the calcium oxide was uniformly dispersed in the co-polymer acid. There was no apparent reaction.

6

**Claims**

1. A method of making ionic copolymer salts from low molecular weight copolymer acids having a number average molecular weight from 500 to 20,000, and formed from ethylene and an alpha, beta-ethylenically unsaturated carboxylic acid having at least one carboxylic acid group, the copolymer acid being neutralized by the oxide of a metal from Group II of the Periodic Table or Elements, the reaction being conducted at a temperature within the reaction vessel from 30°C above the melting point of the copolymer acid to 300°C, characterised in that the copolymer acid and the metal oxide material are fed to a reaction vessel and mixed within the reaction vessel at a temperature between the melting point of the copolymer acid and 20°C above the melting point of the copolymer acid and then the mixture is allowed to rise to above 30°C above the melting point of the co-polymer acid.

2. The method as recited in claim 1 further comprising the step of maintaining an inert atmosphere in the reaction vessel.

3. The method as recited in claim 2 wherein the copolymer acid and metal oxide are mixed between the melting point of the copolymer acid and 10°C above the melting point of the copolymer acid.

4. The method as recited in claim 2 wherein the reaction is conducted at from 130°C to 300°C.

5. The method as recited in claim 2 further comprising the step of maintaining a reduced pressure in the reaction vessel of from 15 to 29.9 inches of mercury ($51 \times 10^3$ to $101 \times 10^3$ Pa) for at least a portion of the reaction time.

6. The method as recited in claim 2 wherein the alpha,beta-ethylenically unsaturated carboxylic acid has 3 to 8 carbon atoms.

7. The method as recited in claim 1 wherein the metal is selected from the group consisting of magnesium, calcium, barium, and zinc.

8. The method as recited in claim 6 wherein from 15% to 60% of the carboxylic acid groups of the copolymer acid are neutralized.

9. The method as recited in claim 6 wherein the copolymer of ethylene and acrylic acid has an acid number from 1 to 180.

10. A method of making a substantially unreacted uniform dispersion of a metal oxide in a copolymer acid, the copolymer acid having a number average molecular weight from 500 to 20,000 and being formed from ethylene and an alpha,beta-ethylenically unsaturated carboxylic acid having at least one carboxylic acid group and the metal oxide being the oxide of a metal from Group II of the Periodic Table of Elements, comprising the steps of mixing the copolymer acid and metal oxide at a temperature between the melting point of the copolymer acid and 20°C above the melting point of the copolymer acid for a time sufficient to allow uniform mixing and thereafter cooling the mixture to room temperature prior to the occurrence of any substantial reaction between the oxide and the acid.

11. The method as recited in claim 10 further comprising the step of melting the copolymer acid prior to mixing with the metal oxide.

**Patentansprüche**

1. Verfahren zum Herstellen von ionischen Copolymersalzen aus Säuren mit niedrigem Molekulargewicht, die ein zahlenmäßig durchschnittliches Molekulargewicht von 500 bis 20 000 besitzen und aus Ethylen und einer α,β-ethylenische ungesättigten Carbonsäure mit mindestens einer Carbonsäuregruppe hergestellt sind, wobei die Copolymersäure mit einem Oxid eines Metalls der Gruppe II des Periodensystems neutralisiert und die Reaktion bei einer in dem Rekationsgefäß herrschenden Temperatur von 30°C über dem Schmelzpunkt der Copolymersäure bis 300°C durchgeführt wird, dadurch gekennzeichnet, daß die Copolymersäure und das Metalloxid material einem Reaktionsgefäß und in dem Reaktionsgafäß bei einer Temperatur gemischt werden, die zwischen dem Schmelzpunkt der Copolymersäure einer Temperatur liegt, die 20°C höher ist als der Schmelzpumkt der Copolymersäure, und der Temperatur des Gemisches dann gestattet wird, auf einen Wert zu steigen, der um mehr als 30°C über dem Schmelzpunkt der Polymersäure liegt.

2. Verfahren nach Anspruch 1, dadurch gekennzeichnet, daß in dem Reaktionsgefäß eine inerte Atmosphäre aufrechterhalten wird.

3. Verfahren nach Anspruch 2, dadurch gekennzeichnet, daß die Copolymersäure und das Metalloxid bei einer Temperatur gemischt werden, die zwischen dem Schmelzpunkt der Copolymersäure und einer Temperatur leigt, der 10° über dme Schmelzpumkt der Copolymersäure liegt.

4. Verfahren nach Anspruch 2, dadurch gekennzeichnet, daß die Reaktion bei einer Temperatur von 130 bis 300°C durchgeführt wird.

5. Verfahren nach Anspruch 2, dadurch gekennzeichnet, daß in dem Reaktionsgefäß mindestens während eines Teils der Reaktionszeit ein Unterdruck von $51 \times 10^3$ bis $101 \times 10^3$ Pa aufrechterhalten wird.

6. Verfahren nach Anspruch 2, dadurch gekennzeichnet, daß die α,β-ethylenisch ungesättigte Carbonsäure 3 bis 8 Kohlenstoffatome besitzt.

7. Verfahren nach Anspruch 1, dadurch gekennzeichnet, daß das Metall aus der Gruppe ausgewählt ist, die aus Magnesium, Calcium, Barium und Zink besteht.

8. Verfahren nach Anspruch 6, dadurch gekennzeichnet, daß 15 bis 60% der Carbonsäuregruppen der Copolymersäure neutralisiert sind.

9. Verfahren nach Anspruch 6, dadurch gekennzeichnet, daß das Copolymere aus Ethylen und Acrylsäure eine Säurezahl von 1 bis 180 hat.

10. Verfahren zum Erzeugen einer im wesentlichen nicht umgesetzten, einheitlichen Dispersion eines Metalloxids in einer Copolymersäure, die ein zahlenmäßig durchschnittliches Molekulargewicht von 500 bis 20 000 und aus Ethylen und einer α,β-ethylenisch ungesättigten Carbonsäure mit mindestens einer Carbonsäuregruppe hergestellt ist und das Metalloxid das Oxid eines Metalls der Gruppe II des Periodensystems ist, wobei das Coplymeroxid und das Metalloxid bei einer Temperatur zwischen dem Schmelzpunkt der Copolymersäure und einem 2° über dem Schmelzpunkt der Copolymersäure liegenden Wert so lange gemischt werden, daß ein einheitliches Gemisch erzielt wird, und danach das Gemisch auf Zimmertemperatur abgekühlt wird, bevor eine beträchtliche Reaktion zwischen dem Oxid und der Säure stattfindet.

11. Verfahren nach Anspruch 10, in dem das Copolymer vor dem Vermischen mit dem Metalloxid geschmolzen wird.

## Revendications

1. Un procédé de préparation de sels de copolymères ioniques à partir d'acides copolymères de faible poids moléculaire, ayant un poids moléculaire numérique moyen compris entre 500 et 20.000, et formés à partir d'éthylène et d'un acide carboxylique à insaturation alpha,béta-éthylénique, ayant au moins un groupe acide carboxylique, l'acide copolymère étant neutralisé par l'oxyde d'un métal du groupe II de la classification périodique des éléments, la réaction étant effectuée à une température dans le réacteur supérieur de 30°C au point de fusion de l'acide copolymère jusqu'à 300°C, caractérisé en ce que l'acide copolymère et le matériu oxyde métallique sont alimentés dans un réacteur et mélangés dans le réacteur à une température comprise entre le point de fusion de l'acide copolymère et 20°C au-dessus du point de fusion de l'acide copolymère et on laisse ensuite le mélange se réchauffer jusqu'à plus de 30°C au-dessus du point de fusion de l'acide copolymère.

2. Le procédé selon la revendication 1 comprenant en outre l'étape de maintenir une atmosphère inerte dans le réacteur.

3. Le procédé selon la revendication 2 dans laquel l'acide copolymère et l'oxyde métallique sont mélangés entre le point de fusion de l'acide copolymère et 10°C au-dessus du point de fusion de l'acide copolymère.

4. Le procédé selon la revendication 2 dans lequel la réaction est effectuée entre 130°C et 300°C.

5. Le procédé selon la revendication 2 comprenant en outre l'étape de maintenir une pression réduite dans le réacteur comprise entre 15 et 29,9 pouces de mercure ($51 \times 10^3$ à $101 \times 10^3$ Pa) pendant au moins une portion du temps de réaction.

6. Le procédé selon la revendication 2 dans lequel l'acide carboxylique à insaturation alpha,béta-éthylénique contient de 3 à 8 atomes de carbone.

7. Le procédé selon la revendication 1 dans lequel le métal est choisi parmi le groupe constitué par le magnésium, le calcium, le baryum, et le zinc.

8. Le procédé selon la revendication 6 dans laquel de 15% à 60% des groupes acides carboxyliques de l'acide copolymère sont neutralisés.

9. Le procédé selon la revendication 6 dans lequel le copolymère d'éthylène et d'acide acrylique a un indice d'acide compris entre 1 et 180.

10. Un procédé de préparation d'une dispersion uniforme sensiblement non réagie d'un oxyde métallique dans un acide copolymère, l'acide copolymère ayant un poids moléculaire numérique moyen compris entre 500 et 20.000, et étant formé à partir d'éthylène et d'un acide carboxylique à insaturation alpha,béta-éthylénique, ayant au moins un groupe acide carboxylique, et l'oxyde métallique étant l'oxyde d'un métal du groupe II de la classification périodique des éléments, comprenant les étapes de mélange de l'acide copolymère et de l'oxyde métallique à une température comprise entre le point de fusion de l'acide copolymère et 20°C au-dessus du point de fusion de l'acide copolymère pendant un temps suffisant pour permettre un mélange uniforme et le refroidissement ultérieur du mélange à la température ambiante avant la survenue de tout réaction sensible entre l'oxyde et l'acide.

11. Le procédé selon la revendications 10 comprenant en outre l'étape de faire fondre l'acide copolymère avant de le mélanger à l'oxyde métallique.